Europäisches Patentamt

European Patent Office

Office européen des brevets

(19)

(11) Veröffentlichungsnummer: **0 535 363 A2**

## (12) EUROPÄISCHE PATENTANMELDUNG

(21) Anmeldenummer: **92114472.1**

(22) Anmeldetag: **25.08.92**

(51) Int. Cl.[5]: **H04B 1/16**

(30) Priorität: **30.09.91 DE 4132520**

(43) Veröffentlichungstag der Anmeldung:
**07.04.93 Patentblatt 93/14**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Rodler, Hermann, Dipl-Ing.**
**Hofmarkweg 3**
**W-8025 Unterhaching(DE)**
Erfinder: **Schumann, Fritz, Dipl-Ing.**
**Schwalbenstrasse 102**
**W-8012 Ottobrunn(DE)**
Erfinder: **Tietgen, Karl-Heinz, Dr.**
**Josephsburgstrasse 40**
**W-8000 München 80(DE)**

(54) **Empfangseinrichtung für amplituden-, frequenz- und/oder FSK-modulierte Sendesignale auf verschiedenen Trägerfrequenzkanälen.**

(57) Eine Empfangseinrichtung für frequenzmodulierte Sendesignale(S) auf verschiedenen Trägerfrequenzkanälen, mit der aus empfangenen Kanälen zumindest ein bestimmter Kanal auswählbar ist, soll gegenüber einer bekannten solchen Einrichtung, die ein breitbandiges Frontend und Filter zur Auswahl des bestimmten Kanals aufweist, rauschärmer sein. Dazu weist dieEmpfangseinrichtung einen auf die Trägerfrequenz des bestimmten Kanals abgestimmten oder abstimmbaren elektrischen Resonanzkreis (1) auf, der ein eine die Resonanzfrequenz des Resonanzkreises (1) mitbestimmende Kapazität ($c_d$) aufweisendes Wandlerelement (11) zum Umwandeln der empfangenen Sendesignale (S) in ein elektrisches Signal (eS) aufweist, und so bemessen oder abstimmbar ist, daß die Resonanzfrequenz des Resonanzkreises (1) bei der Trägerfrequenz des bestimmten Kanals liegt. Anwendung bei der optischen Subcarrierübertragungstechnik.

FIG 1

Die Erfindung betrifft eine Empfangseinrichtung für amplituden-, frequenz- und/oder FSK-modulierte optische Sendesignale auf verschiedenen Trägerfrequenzkanälen nach dem Oberbegriff des Anspruchs 1.

In der optischen Subcarrierübertragungstechnik werden die Basisbandkanäle zuerst elektrisch auf verschiedene Trägerfrequenzen moduliert und mit dem daraus resultierenden Hochfrequenzsignal ein Laser intensitätsmoduliert. Im Empfänger will man dann einen bestimmten Kanal auswählen und empfangen. Bei einer bisher bekannten Empfangseinrichtung zu diesem Zweck werden alle oder ein Teil der Kanäle in einem breitbandigen Frontend empfangen und anschließend mit Hilfe von Filtern der bestimmte Kanal selektiert. Wegen der Breitbandigkeit des Frontends treten bei dieser Empfangseinrichtung Rauschprobleme auf.

Der im Anspruch 1 angegebenen Erfindung liegt die Aufgabe zugrunde, eine relativ zu der bekannten Empfangseinrichtung rauschärmere Empfangseinrichtung der eingangs genannten Art anzugeben.

Bei der Resonanzfrequenz weist der erfindungsgemäße Empfänger eine mit einer hohen Verstärkung gleichbedeutende hohe Eingangsimpedanz auf, was für ein hohes Signal-Rauschverhältnis von Vorteil ist. Durch die Abstimmbarkeit des Resonanzkreises, vorzugsweise durch eine zusätzlich frequenzbestimmende abstimmbare Einrichtung, beispielsweise eine Induktivität und/oder Kapazität, kann die Resonanzfrequenz in Übereinstimmung mit der Trägerfrequenz des bestimmten Kanals gebracht werden. Durch geeignete Wahl eines Vorspannwiderstandes kann die Güte des Resonanzkreises so festgelegt werden, daß die für den bestimmten Kanal benötigte Bandbreite erzielt wird.

Durch die Erfindung ist es auf elegante Weise möglich, die Kanalvorauswahl (preselection) mit einer Rauschoptimierung für den bestimmten Kanal zu kombinieren. Durch die Verwendung des abgestimmten oder abstimmbaren Resonanzkreises in der Empfängereinrichtung kombiniert die Erfindung Rauschoptimierung und Frequenzselektivität.

Die auf das optische Sendesignal aufmodulierten Trägerfrequenzen können Frequenzen aus dem HF-, VHF-, UHF- oder Mikrowellenbereich sein.

Bevorzugte und vorteilhafte Ausgestaltungen der erfindungsgemäßen Einrichtung gehen aus den Ansprüchen 2 bis 12 hervor. Bei Trägerfrequenzen aus dem Mikrowellenbereich, die beispielsweise bei der Übertragung einer großen Zahl von Fernsehsignalen zwangsläufig entstehen, sind konzentrierte Bauelemente nicht mehr anwendbar. Eine vorteilhafte Ausgestaltung einer zum Empfang von Trägerfrequenzen aus dem Mikrowellenbereich geeigneten erfindungsgemäßen Empfangseinrichtung ist im Anspruch 13 angegeben. Vorteilhafte Ausgestaltungen dieser Einrichtung nach Anspruch 13 gehen aus den Ansprüchen 14 bis 16 hervor.

Die Erfindung wird anhand der Figuren in der nachfolgenden Beschreibung beispielhaft näher erläutert. Es zeigen:

Figuren 1 bis 4
jeweils ein Ausführungsbeispiel einer für den Empfang optischer Sendesignale mit aufmodulierten Subträgern im HF- und/oder UHF-Bereich geeigneten erfindungsgemäßen Empfangseinrichtung,

Figur 5
ein Ausführungsbeispiel einer zum Empfang optischer Sendesignale mit aufmodulierten Subträgern aus dem Mikrowellenbereich geeigneten erfindungsgemäßen Empfangseinrichtung,

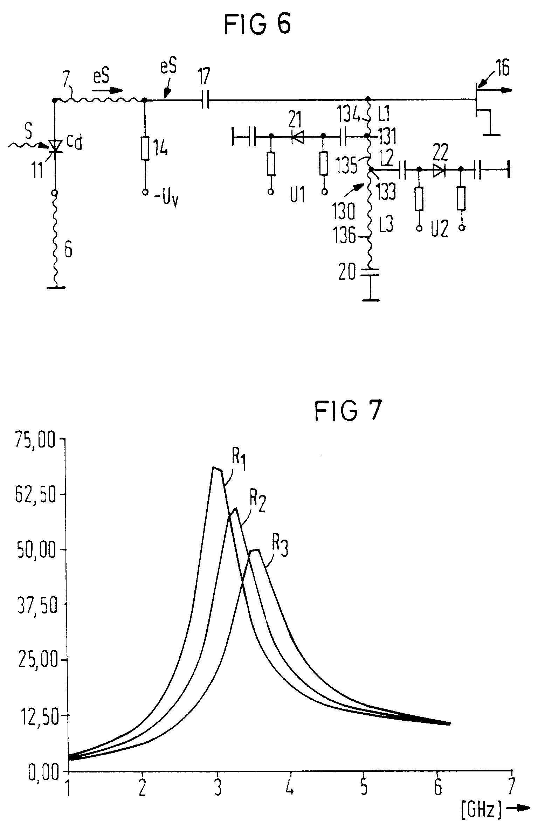

Figur 6
eine Empfangseinrichtung nach Figur 5, bei der die Stichleitung durch Bonddrähte realisiert ist, und

Figur 7
drei Resonanzkurzen, wie sie mit dem Ausführungsbeispiel nach Figur 5 oder 6bei drei verschiedenen wirksamen Längen der Stichleitung erhalten werden.

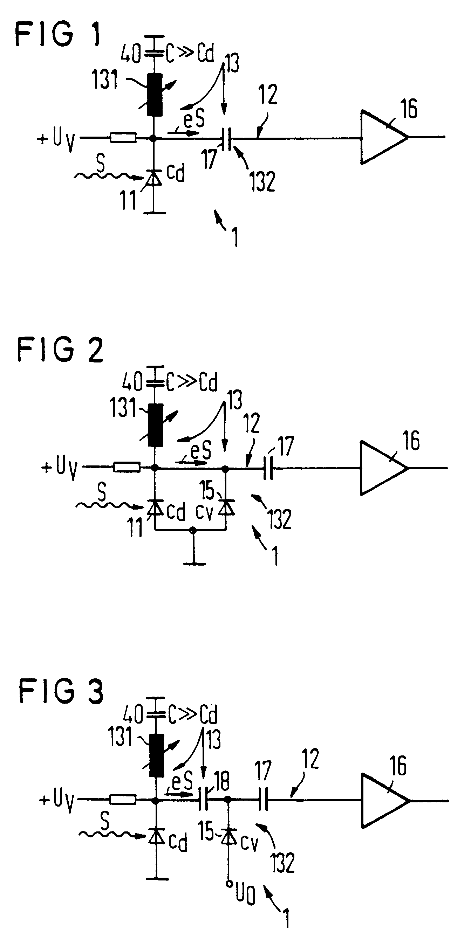

Den Ausführungsbeispielen nach den Figuren 1 bis 5 ist gemeinsam ein Wandlerelement 11 in Form einer Photodiode mit einer die Resonanz des Resonanzkreises 1 mitbestimmenden Sperrschichtkapazität $c_d$. Die Sperrschichtkapazität $c_d$ und damit die Art der Diode richtet sich nach der Art der zu empfangenden Sendesignale S. Die Sperrschichtkapazität $c_d$ bestimmt u.a. die Resonanzfrequenz $f_{res}$. Die Resonanzfrequenz $f_{res}$ wird auch bestimmt durch eine Transistoreingangskapazität, durch Streu- und Schaltkapazitäten sowie durch Schaltinduktivitäten.

Das von dem Wandlerelement 11 erzeugte elektrische Signal eS wird auf einem Signalpfad 12 einem elektrischen Verstärker 16 zugeführt, der dieses Signal eS für eine Weiterverarbeitung verstärkt.

Die Ausführungsbeispiele nach den Figuren 1 bis 5 unterscheiden sich voneinander im wesentlichen durch die Ausbildung der mit dem Signalpfad 12 verbundenen zusätzlich frequenzbestimmenden Einrichtung 13, die so bemessen oder abstimmbar ist, daß die Resonanzfrequenz des Resonanzkreises 1 bei der Trägerfrequenz des bestimmten Kanals liegt.

Bei den Ausgestaltungen nach den Figuren 1 bis 4 ist die frequenzbestimmende Einrichtung 13 durch eine Induktivität 131 und eine weitere Kapazität 132 realisiert. Prinzipiell reicht von den Elementen Induktivität und Kapazität eines aus. Bei abstimmbarer frequenzbestimmender Einrichtung 13 reicht es aus, wenn nur eines dieser Elemente abstimmbar ist.

Speziell ist bei den Ausführungsbeispielen nach den Figuren 1 bis 4 die mit dem Signalpfad 12 verbundene Induktivität 131 abstimmbar und in Bezug auf den Signalpfad 12 parallel zum Wandlerelement 11 geschaltet.

Bei den Ausführungsbeispielen nach den Figuren 1 bis 3 ist die Induktivität 131 durch einen Entkoppelkondensator 40 mit einer im Vergleich zur Sperrschichtkapazität $c_d$ sehr großen Kapazität c mit einem Bezugspotential, z.B. Masse, verbunden.

Bei dem Ausführungsbeispiel nach Figur 1 ist die frequenzbestimmende Einrichtung 13 durch die abstimmbare Induktivität 131 und die weitere Kapazität 132 realisiert, die durch den in den Signalpfad geschalteten Kondensator 17 fester Kapazität gebildet ist. Dieser Kondensator 17 dient in erster Linie zur gleichstrommäßigen Entkopplung des Wandlerelements 11 vom Verstärker 16 und könnte prinzipiell entfallen.

Das Ausführungsbeispiel nach Figur 2 unterscheidet sich vom Ausführungsbeispiel nach Figur 1 dadurch, daß die weitere Kapazität 132 nicht nur durch den in den Signalpfad 12 geschalteten Kondensator 17 sondern auch durch die Sperrschichtkapaztität $c_v$ einer in Bezug auf den Signalpfad 12 parallel zum Wandlerelement 11 geschalteten weiteren Diode 15 oder die Sperrschichtkapazität $c_d$ derPhotodiode 11 selbst gebildet ist. Diese Sperrschichtkapazität $c_v$ oder cd bildet eine abstimmbare Kapazität, wenn die Vorspannung $U_v$ variiert wird.

Das Ausführungsbeispiel nach Figur 3 unterscheidet sich vom Ausführungsbeispiel nach Figur 2 lediglich dadurch, daß im Signalpfad 12 zwischen dem Wandlerelement 11 und der weiteren Diode 15 ein zusätzlicher Kondensator 18 angeordnet ist, der das Wandlerelement 11 und die weitere Diode 15 gleichstrommäßig voneinander entkoppelt. Die weitere Diode 15 hängt gleichspannungsmäßig "in der Luft", wodurch keine Variation ihrer Sperrschichtkapazität möglich ist.

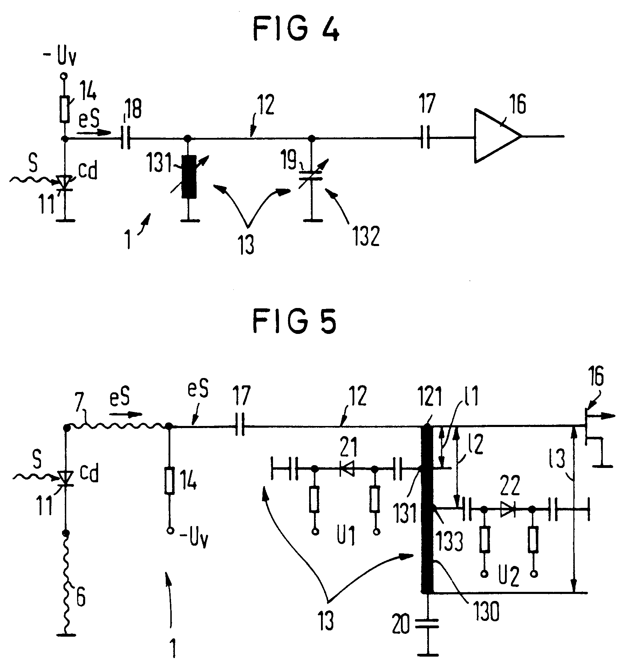

Das Ausführungsbeispiel nach Figur 4 unterscheidet sich von dem Ausführungsbeispiel nach Figur 3 im wesentlichen dadurch, daß der Signalpfad 12 von einer Verbindung zwischen dem Wandlerelement 11 und einem Vorspannwiderstand 14 abzweigt, und daß die frequenzbestimmende Einrichtung 13 an den Signalpfad 12 zwischen den im Signalpfad 12 angeordneten Kondensatoren 17 und 18 angeschlossen ist. Diese frequenzbestimmende Einrichtung 13 besteht aus der an dem Signalpfad 12 angeschlossenen abstimmbaren Induktivität 131 und der an dem Signalpfad 12 angeschlossenen abstimmbaren Kapazität 132, die durch den abstimmbaren Kondensator 19 gebildet ist. Der abstimmbare Kondensator 19 kann durch

die Sperrschichtkapazität $c_v$ einer weiteren Diode 15 realisiert sein.

Die Induktivität 131 und/oder die Kapazität 132 können mechanisch oder elektrisch abstimmbar sein. Beispielsweise kann die Variation der Sperrschichtkapazität $c_v$ oder $c_d$ einer Diode 15 oder der Photodiode 11 durch Änderung der Vorspannung $U_v$ erfolgen.

Der Resonanzkreis 1 kann auch mit einer Serienschwingkreisanordnung realisiert sein. Eine solche Serienschwingkreisanordnung ist zwischen dem Wandlerelement 11 und dem Eingang des Verstärkers 16 anzuordnen und ist für Breitbandempfänger günstig.

Bei Mikrowellensignalen, die beispielsweise bei der Übertragung einer großen Zahl von Fernsehsignalen zwangsläufig entstehen, sind konzentrierte Bauelemente, wie sie bei den Figuren 1 bis 4 angenommen werden können, nicht mehr anwendbar. In diesem Fall weist der Resonanzkreis eine in der Länge veränderbare Stichleitung auf, die im Kurzschluß oder im Leerlauf betrieben und als Abstimmelement verwendet ist. In der Figur 5 ist ein Ausführungsbeispiel eines solchen Resonanzkreises dargestellt.

Der Resonanzkreis 1 weist die an den Signalpfad 12 angeschlossene Stichleitung 130 in Form einer Mikrostreifenleitung auf, die als Abstimmelement dient. Die anderen frequenzbestimmenden Elemente sind durch die Sperrschichtkapazität $c_d$ der Photodiode 11, die Induktivität von bei der Herstellung des Resonanzkreises zu verwendenden Bonddrähten 7 und 8, sowie durch eine Eingangskapazität des Verstärkers 16 in Form eines Transistors vorgegeben, dem eine Vorspannung $U_{GS}$ über den Kondensator 20 zuführbar ist.

Der durch die Stichleitung 130 erzeugte Blindwiderstand ergänzt die genannten frequenzbestimmenden Elemente zu dem Resonanzkreis 1, dessen Frequenz durch Verändern der Leitungslänge der Stichleitung mechanisch oder elektronisch abgestimmt werden kann.

Bei dem Ausführungsbeispiel nach Figur 5 erfolgt die Veränderung der Länge der Stichleitung 130 elektronisch durch die Dioden 21, 22 usw., die PIN-Dioden sein können, und die an verschiedenen, in Längsrichtung der Stichleitung 130 im Abstand voneinander angeordneten Stellen 131, 132 usw. an die Stichleitung 130 angeschlossen sind.

Wird beispielsweise die Stichleitung 130 durch die Diode 21 an der Stelle 131 mittels einer geeigneten Steuerspannung $U_1$ kurzgeschlossen, wirkt nur der Längsschnitt $l_1$ zwischen der Stelle 131 und dem Anschlußpunkt 121 der Stichleitung 130 an den Signalpfad als eine Induktivität, die einen entsprechenden induktiven Blindwiderstand erzeugt. Wird dagegen nicht die Diode 21, sondern die Diode 22 durch eine geeignete Steuerspannung

U$_2$ kurzgeschlossen, so wirkt der zwischen der Stelle 132 und der Anschlußstelle 121 liegende größere Längsabschnitt l$_2$ der Stichleitung 130 als Induktivität, die durch einen anderen induktiven Blindwiderstand erzeugt. Wird dagegen die Stichleitung weder am Punkt 131 noch am Punkt 133 durch die Diode 21 bzw. 22 kurzgeschlossen, so wirkt die ganze Länge l$_3$ der Stichleitung 130 als Induktivität, die einen induktiven Blindwiderstand erzeugt.

Die Abstimmung der Stichleitung 130 oder eines anderen Elements zur Erzeugung eines Blindwiderstandes kann auch durch mechanische oder elektronische Variation der auf das elektrische Feld oder das magnetische Feld bezogenen Materialkonstanten $\epsilon_r$ bzw. $\mu_r$ erfolgen.

Bei einem Ausführungsbeispiel eines Resonanzkreises nach Figur 5 betrug die Sperrschichtkapazität c$_d$ etwa 0,3 pF, die Induktivität jedes Bonddrahtes 6, 7 etwa 1 nH, die Eingangskapazität des Verstärkers 16 etwa 0,6 pF. Der Widerstandswert des Vorspannwiderstand 14 betrug 4 kOhm, die Kapazität des Kondensators 17 betrug 100 pF und die Stichleitung 130 mit $\epsilon_r$ = 2,33 hatte einen Widerstand von 50 Ohm, wobei die Länge der Stichleitung 130 auf 5 mm, 6 mm und 7 mm einstellbar war.

Mit diesem Beispiel konnten die in Figur 7 dargestellten drei Resonanzkurven R$_1$, R$_2$ und R$_3$ erhalten werden, von denen die Kurve R$_3$ mit ihrem Maximum bei 3 GHz der Stichleitungslänge l$_1$ = 7 mm, die Kurve R$_2$ der Stichleitungslänge l$_3$ = 6 mm und die Kurve R$_1$ der Stichleitungslänge l$_1$ = 5 mm zugeordnet ist. Im praktischen Versuch konnte mit diesem Beispiel ein Empfindlichkeitsgewinn von etwa 7 dB bezogen auf die erforderliche optische Eingangsleistung einer Einrichtung mit breitbandigem Frontend und mit Filtern zum Selektieren des bestimmten Kanals.

Das Beispiel nach Figur 6 unterscheidet sich vom Beispiel nach Figur 5 im wesentlichen nur dadurch, daß die Stichleitung 130 durch Bonddrähte 134, 135 und 136 realisiert ist. Die Länge des Bonddrahtes 134 ist so gewählt, daß seine Induktivität L1 beträgt. Die Länge des Bonddrahtes 135 ist so gewählt, daß seine Induktivität L2 ist. Die Länge des Bonddrahtes 136 ist so gewählt, daß seine Induktivität L3 beträgt. Beispielsweise beträgt L1 etwa 0,8 nH, L2 etwa 1 nH und L3 etwa 1,9 nH für ein c$_d$ von 0,18 pF und eine Eingangskapazität von etwa 0,6 pF. Sind beide Dioden 21 und 22 leitend, ist die wirksame Induktivität der Stichleitung 130 gleich L1. Ist die Diode 21 gesperrt, die Diode 22 dagegen leitend, ist die wirksame Induktivität der Stichleitung 130 gleich L1 + L2. Sind beide Dioden 21 und 22 gesperrt, ist die wirksame Induktivität der Stichleitung 130 gleich L1 + L2 + L3.

Die Beispiele nach den Figuren 5 und 6 weisen einen zwischen mehreren Resonanzfrequenzbereichen umschaltbaren Empfindlichkeitsverlauf auf. Ein erster Resonanzfrequenzbereich liegt zwischen 3,2 und 4,7 GHz und hat eine Bandbreite von 1,5 GHz. Ein zweiter Resonanzfrequenzbereich liegt zwischen 2,22 GHz und 3,2 GHz und hat eine Bandbreite von 0,98 GHz. Ein dritter Resonanzfrequenzbereich liegt zwischen 1,52 GHz und 2, 22 GHz und hat eine Bandbreite von 0,7 GHz. Zwischen diesen Resonanzfrequenzbereichen ist die betreffende Empfangseinrichtung vorteilhafterweise umschaltbar. In jedem dieser Resonanzfrequenzbereiche ist eine auf einen Empfindlichkeitsverlauf ohne Resonanz bezogene Empfindlichkeitserhöhung gegeben, die mindestens 3 dB beträgt.

**Patentansprüche**

1. Empfangseinrichtung für amplituden-, frequenz- und/oder FSK-modulierte optische Sendesignale (S) auf verschiedenen Trägerfrequenzkanälen, wobei mit der Empfangseinrichtung aus empfangenen Kanälen zumindest ein bestimmter Kanal auswählbar ist,
   **gekennzeichnet durch**
   einen auf die Trägerfrequenz des bestimmten Kanals abgestimmten oder abstimmbaren elektrischen Resonanzkreis (1), der ein eine die Resonanzfrequenz des Resonanzkreises (1) mitbestimmende Kapazität (c$_d$) aufweisendes Wandlerelement (11) zum Umwandeln der empfangenen Sendesignal (S) in ein elektrisches Signal (eS) aufweist und so bemessen oder abstimmbar ist, daß die Resonanzfrequenz des Resonanzkreises (1) bei der Trägerfrequenz des bestimmten Kanals liegt.

2. Einrichtung nach Anspruch 1,
   **dadurch gekennzeichnet,**
   daß das Wandlerelement (11) eine Photodiode mit einer die Resonanzfreqeunz des Resonanzkreises (1) mitbestimmenden Sperrschichtkapazität (c$_d$) aufweist.

3. Einrichtung nach Anspruch 1 oder 2,
   **dadurch gekennzeichnet,**
   daß der Resonanzkreis (1) eine mit einem Signalpfad (12) des elektrischen Signals (eS) verbundene, auf die Trägerfrequenz des bestimmten Kanals abgestimmte oder abstimmbare zusätzlich frequenzbestimmende Einrichtung (13) aufweist.

4. Einrichtung nach Anspruch 3,
   **dadurch gekennzeichnet,**
   daß die frequenzbestimmende Einrichtung (13) eine mit dem Signalpfad (12) des elektrischen Signals (es) verbundene Induktivität (131) aufweist.

5. Einrichtung nach Anspruch 4,
**dadurch gekennzeichnet,**
daß die Induktivität (131) in Bezug auf den Signalpfad (12) parallel zum Wandlerelement (11) geschaltet ist.

6. Einrichtung nach Anspruch 4 oder 5,
**dadurch gekennzeichnet,**
daß die Induktivität (131) abstimmbar ist.

7. Einrichtung nach einem der vorhergehenden Ansprüche,
**dadurch gekennzeichnet,**
daß die frequenzbestimmende Einrichtung (13) eine weitere Kapazität (132) aufweist.

8. Einrichtung nach einem der vorhergehenden Ansprüche,
**dadurch gekennzeichnet,**
daß die weitere Kapzität (132) abstimmbar ist.

9. Einrichtung nach Anspruch 6 und 7,
**dadurch gekennzeichnet,**
daß die weitere Kapazität (132) fest ist.

10. Einrichtung nach einem der Ansprüche 7 bis 9,
**dadurch gekennzeichnet,**
daß die weitere Kapazität (132) in Bezug auf den Signalpfad (12) des elektrischen Signals (eS) parallel zum Wandlerelement (11) geschaltet ist.

11. Einrichtung nach Anspruch 10,
**dadurch gekennzeichnet,**
daß die weitere Kapazität (132) eine Sperrschichtkapazität ($c_v$) einer weiteren Diode (15) aufweist.

12. Einrichtung nach einem der vorhergehenden Ansprüche,
**dadurch gekennzeichnet,**
daß die frequenzbestimmende Einrichtung (13) eine an den Signalpfad (12) des elektrischen Signals (eS) angeschlossene Stichleitung (130) in Form einer Mikrostreifenleitung aufweist.

13. Einrichtung nach Anspruch 12,
**dadurch gekennzeichnet,**
daß die Stichleitung (130) im Kurzschluß betrieben ist.

14. Einrichtung nach Anspruch 12 oder 13,
**dadurch gekennzeichnet,**
daß die Sichleitung (130) im Leerlauf betrieben ist.

15. Einrichtung nach einem der Ansprüche 12 bis 14,
**dadurch gekennzeichnet,**
eine Stichleitung (130) mit einer einstellbaren, jeweils für die Resonanzfrequenz der Einrichtung maßgebenden wirksamen Länge oder Induktivität.

16. Einrichtung nach Anspruch 15,
**dadurch gekennzeichnet,**
daß die wirksame Länge oder Induktivität der Stichleitung (130) mittels Dioden (21, 22) einstellbar ist, die mit verschiedenen Anschließpunkten (131, 132) der Stichleitung (130) verbunden und wahlweise in den leitenden gesperrten Zustand schaltbar sind.

17. Einrichtung nach Anspruch 16,
**dadurch gekennzeichnet,**
daß die Stichleitung (130) zwischen den Anschließpunkten (131, 133) durch Bonddrähte (134 bis 136) realisiert ist.

FIG 1

FIG 2

FIG 3

# FIG 4

# FIG 5

## FIG 6

## FIG 7